Europäisches Patentamt

European Patent Office

Office européen des brevets

(19)

(11) Numéro de publication : **0 034 519**
**B1**

(12) # FASCICULE DE BREVET EUROPÉEN

(45) Date de publication du fascicule du brevet :
26.06.85

(51) Int. Cl.⁴ : **F 16 K 31/06**

(21) Numéro de dépôt : 81400157.4

(22) Date de dépôt : 03.02.81

(54) Vanne électromagnétique.

(30) Priorité : 04.02.80 JP 12829/80

(43) Date de publication de la demande :
26.08.81 Bulletin 81/34

(45) Mention de la délivrance du brevet :
26.06.85 Bulletin 85/26

(84) Etats contractants désignés :
CH DE FR GB IT LI NL SE

(56) Documents cités :
FR-A- 2 189 670
US-A- 2 988 675
US-A- 3 062 359
US-A- 3 429 552
US-A- 3 929 315

(73) Titulaire : Fuji Metal Mfg. Co. Ltd.
3-4, 2-chome Itachibori Nishi-ku
Osaka (JP)

(72) Inventeur : Kita, Toshio
7-25-1005, Sagis 3-chome
Fukushima-ku Osaka (JP)

(74) Mandataire : Ores, Irène et al
CABINET ORES 6, Avenue de Messine
F-75008 Paris (FR)

Jouve, 18, rue St-Denis, 75001 Paris, France

EP 0 034 519 B1

## Description

La présente invention est relative à une vanne électromagnétique comportant une bobine d'excitation qui peut être alimentée par une source de courant alternatif, et qui est utilisable pour des fluides corrosifs.

Les vannes électromagnétiques comportent une bobine d'excitation qui est alimentée par une source de courant continu ou par une source de courant alternatif. Les vannes électromagnétiques en courant continu sont avantageuses en ce qu'elles ne présentent pas de vibrations, mais il est nécessaire de préparer une source de courant continu pour le fonctionnement de la vanne. Les soupapes électromagnétiques en courant alternatif peuvent fonctionner directement avec l'alimentation en courant alternatif du réseau et elles sont donc largement utilisées. Toutefois, la bobine d'excitation de la vanne, lorsqu'elle est alimentée en courant alternatif, produit une force magnétique de grandeur variable et, par suite, une force d'attraction variable, dont la valeur instantanée varie périodiquement autour d'une valeur moyenne à une fréquence double de la fréquence de ligne. Par conséquent, la tige de la vanne et les autres pièces qui constituent la vanne vibrent à la fréquence de la force d'attraction variable. Ce phénomène est appelé « vibration » ou broutement et, bien entendu, nuit au bon fonctionnement de la vanne.

Etant donné que ces vibrations sont typiques des circuits électromagnétiques, notamment monophasés, et qu'elles sont donc inévitables, on s'est résigné à les réduire.

Du Brevet US-A-3 082 359 on connaît déjà une vanne électromagnétique correspondant au préambule de la revendication 1.

Ce Brevet US-A-3 082 359 fait connaître la possibilité de pourvoir la surface d'extrémité du noyau fixe, qui est opposée au noyau mobile (ce dernier et le noyau fixe étant entourés par la bobine d'excitation), d'un enroulement d'atténuation qui est habituellement un anneau de fil de cuivre épais. La variation du flux magnétique de la bobine d'excitation induit une force électromotrice dans l'enroulement d'atténuation, ce qui engendre un courant à travers cet enroulement d'atténuation. Ce courant produit un flux magnétique. Comme ce flux est engendré par l'enroulement d'atténuation un peu plus tard que le flux magnétique de la bobine d'excitation, les variations des flux combinés sont plus petites que s'il n'y avait pas d'enroulement d'atténuation, ce qui a pour effet de réduire les vibrations.

Or, il est bien évident que la solution consistant à utiliser un enroulement d'atténuation n'assure pas, à elle seule, une élimination ou compensation totale du broutement, la solution idéale étant constituée par l'application d'une force, sensiblement constante de préférence, qui puisse s'additionner à la force moyenne d'attraction et faire en sorte que les variations de la composante variable, dont la valeur maximale est égale à ladite valeur moyenne — ainsi que cela est connu des techniciens en la matière — ne fassent jamais descendre la force résultante au-dessous de la force strictement nécessaire pour assurer et maintenir l'attraction du noyau mobile de la part du noyau fixe. En réalité, on dispose dans les vannes d'une force que l'on pourrait additionner à la force d'attraction d'origine électromagnétique : il s'agit de la force exercée par le fluide sous pression, notamment à la partie inférieure du noyau mobile. Toutefois, il est courant, dans le domaine qui nous intéresse, de pourvoir à l'équilibrage de la pression qui agit à la partie inférieure dudit noyau mobile en établissant un passage de communication avec sa partie supérieure, et ce dans le but de réduire le temps nécessaire à la fermeture de la vanne, étant donné que cet équilibrage élimine le besoin de vaincre, à la fermeture, la pression du fluide dont on désire annuler le débit.

D'autre part, lorsqu'on utilise une vanne électromagnétique, telle que celle décrite dans ledit Brevet US-A-3 082 359, pour contrôler le débit d'une solution alcaline aqueuse ou d'un autre fluide corrosif, le fluide s'écoule jusqu'à l'emplacement du noyau fixe de la bobine d'excitation ou de l'enroulement d'atténuation qui se trouve sur le noyau, ce qui peut provoquer la corrosion du noyau ou de l'enroulement d'atténuation. Le noyau fixe qui doit bien entendu être une pièce magnétique, doit également être résistant à la corrosion, lorsque la vanne est utilisée pour des fluides corrosifs. Bien qu'on utilise parfois l'acier inoxydable magnétique pour le noyau, cet acier inoxydable est moins résistant à la corrosion que l'acier inoxydable non magnétique. De plus, l'enroulement d'atténuation, qui est en général en cuivre, est davantage sujet à la corrosion.

Pour protéger contre le fluide corrosif le noyau fixe, ainsi que le noyau mobile, le Brevet FR-A-2 189 670 utilise la solution, qui consiste :

— à encapsuler complètement le noyau mobile dans une chambre dont les parois sont réalisées en un matériau résistant aux fluides corrosifs, en particulier aux acides, en sorte que ledit noyau mobile puisse coulisser sans danger dans la partie cylindrique de guidage de son manchon de support lorsque ce dernier se remplit de fluide, à l'ouverture de la vanne, et

— à pourvoir l'extrémité supérieure de ladite partie cylindrique du manchon de guidage d'un disque de fermeture qui :

est solidaire de cette partie cylindrique de guidage,

est en contact avec la surface d'extrémité du noyau fixe,

porte un bord dépassant qui entoure la périphérie de l'extrémité dudit noyau fixe (l'extrémité avant dudit bord dépassant étant soudée à ce noyau fixe),

en sorte que l'on peut réaliser en toute matière résistant aux fluides corrosifs, non seulement ladite chambre d'encapsulation, mais également l'élément d'obturation du siège de soupape, la chambre enveloppant le noyau mobile et le manchon de guidage de ce dernier, tandis que le noyau mobile et le noyau fixe peuvent être réalisés en toute matière magnétique appropriée, sans craindre l'attaque de la part des fluides corrosifs.

Toutefois, l'emploi d'une vanne électromagnétique, telle que celle décrite dans ledit Brevet FR-A-2 189 670, en courant alternatif, introduit une nouvelle source de broutement qui est constituée par le jeu existant entre ledit disque de fermeture — dont est pourvue l'extrémité supérieure de la partie cylindrique du manchon de guidage du noyau mobile — qui se comporte comme une sorte de ressort à lame et qui provoque, en fait, un broutement accentué.

La présente invention a en conséquence pour but de pourvoir à une vanne électromagnétique, pouvant être alimentée par une source de courant alternatif et utilisable pour contrôler le débit des fluides corrosifs, qui répond mieux aux nécessités de la pratique que les vannes électromagnétiques antérieurement connues, notamment en ce qu'elle fonctionne sans broutement lorsque sa bobine d'excitation est alimentée par une source de courant alternatif.

La présente invention, telle qu'elle est caractérisée dans la revendication 1, résout ces problèmes. Un modèle particulier de réalisation de l'invention apparaît dans la revendication dépendante.

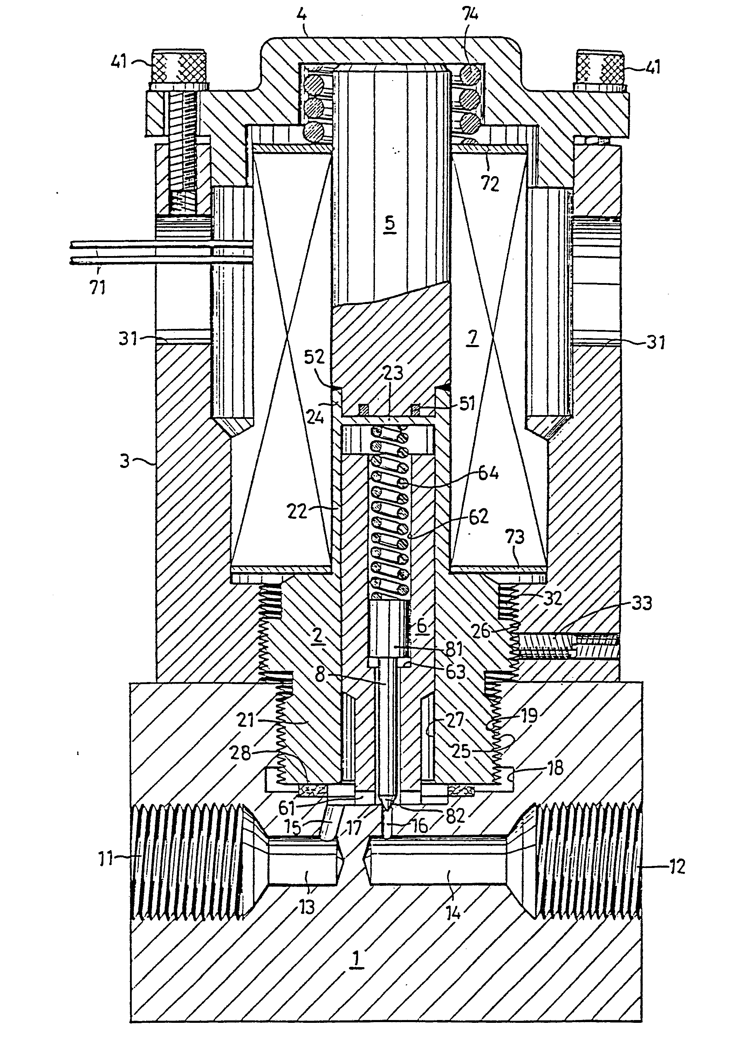

L'invention sera mieux comprise à l'aide du complément de description qui va suivre, qui se réfère au dessin annexé qui représente une vue en coupe d'une vanne électromagnétique conforme à l'invention.

Il doit être bien entendu, toutefois, que ce dessin et les parties descriptives correspondantes, sont donnés uniquement à titre d'illustration de l'objet de l'invention, dont ils ne constituent en aucune manière une limitation.

La vanne électromagnétique, représentée au dessin, comprend un corps de vanne 1 ayant une entrée de fluide 11 et une sortie de fluide 12, un support ou manchon de guidage 2 fixé au corps de vanne 1, un boîtier de bobine 3 fixé au support 2, un capot 4 emboîté sur le boîtier 3, un noyau fixe 5 et un noyau mobile 6 qui sont alignés dans une direction perpendiculaire à l'axe passant par l'entrée 11 et la sortie 12 du corps 1, et une bobine d'excitation 7 logée dans le boîtier 3 et entourant les noyaux 5 et 6.

Le corps de vanne 1 comporte une grande cavité dans sa face supérieure. Le boîtier 1 est taraudé, comme indiqué en 19, sur sa périphérie intérieure qui définit la cavité 18. Le support 2 est constitué d'une partie inférieure 21, servant à sa fixation, et d'une partie cylindrique supérieure 22, dirigée vers le haut à partir de la partie 21 et servant pour le guidage du noyau mobile 6. La partie de fixation 21 comporte des filetages extérieurs haut et bas, 26 et 25 respectivement. Le filetage inférieur 25 du support 2 est vissé dans la cavité 18 du boîtier 1, de sorte que l'élément support 2 est solidement fixé au corps 1. Un joint annulaire 28 est interposé entre la face d'extrémité inférieure du support 2 et le fond de la cavité 18.

Le support 2 comporte un alésage axial 27 qui se prolonge verticalement vers le haut dans la partie cylindrique 22. L'extrémité inférieure de l'alésage 27 est ouverte. L'extrémité supérieure de l'alésage 27 est fermée par un disque 23 formé à l'extrémité supérieure de la partie cylindrique 22. La paroi périphérique de la partie cylindrique 22 se prolonge vers le haut, au-delà du disque 23, de manière à constituer un bord dépassant 24. Le disque 23 et le bord dépassant 24 sont solidaires de la partie cylindrique 22 et forment avec celle-ci une pièce monobloc.

Le noyau mobile 6 est logé dans l'alésage 27, de façon à pouvoir se déplacer verticalement.

Contrairement à l'usage courant dans le domaine des vannes — qui consiste à réaliser un équilibrage de pression entre la partie inférieure et la partie supérieure de la tige de soupape, à savoir du noyau mobile, en ménageant un passage de communication du fluide entre ces deux parties inférieure et supérieure de manière à réduire le temps nécessaire pour la fermeture de la vanne (en fait, cet équilibrage élimine la nécessité de vaincre, à la fermeture, la pression exercée par le fluide dont on désire annuler le débit) — la présente invention n'établit aucun passage de communication entre la partie inférieure et la partie supérieure du noyau mobile 6, et ce dans le but d'utiliser la pression exercée à la partie inférieure de ce dernier par le fluide, notamment à l'ouverture et pendant toute la durée de l'ouverture de la vanne, ce qui permet d'additionner une force de pression, sensiblement constante, à la force d'attraction moyenne d'origine électromagnétique, qu'on a en courant alternatif, et à la force de réaction exercée par l'enroulement d'atténuation 51, de manière à obtenir une force d'attraction résultante qui n'est jamais au-dessous de la force strictement nécessaire pour assurer et maintenir le noyau mobile 6 appliqué contre le noyau fixe 5 par l'intermédiaire du disque 23. Pour cela, la partie inférieure du noyau mobile 6 a un diamètre réduit qui permet de créer, à l'ouverture du siège de soupape et pendant tout le temps de maintien de cette ouverture, un « manchon » de fluide sous pression qui pousse le noyau mobile vers le haut.

Toutefois, un équilibrage de pression est nécessaire, pendant la phase de fermeture de la vanne, pour annuler l'effet d'éventuelles surpressions accidentelles qui peuvent se manifester en amont du siège de soupape, par rapport au sens d'écoulement du fluide en condition d'ouverture, et qui provoqueraient le soulèvement indésiré du noyau mobile 6 et, avec ce dernier, de la tige de soupape 8.

Pour cela, l'alésage axial 62, ménagé verticalement dans le noyau mobile 6 et destiné à supporter de façon mobile la tige de soupape 8, présente une partie inférieure de petit diamètre, dans laquelle est logé le corps de ladite tige 8, et une partie supérieure de grand diamètre dans laquelle est logée une tête 81 solidaire de l'extrémité supérieure de cette tige de soupape 8, en sorte qu'un épaulement 63 est formé entre ces deux parties inférieure et supérieure de l'alésage 62 et qu'un espace est ménagé, à l'état de fermeture de la vanne, entre ledit épaulement 63 et la face d'extrémité de la tête 81 de la tige de soupape 8 : le fluide peut accéder dans cet espace par l'intermédiaire d'un jeu approprié, qui est ménagé entre le corps de la tige de soupape 8 et la paroi de la paroi inférieure de petit diamètre de l'alésage 62, et par l'intermédiaire de deux gorges radiales 61, diamétralement opposées. Une telle disposition assure le nécessaire équilibrage de pression entre la partie inférieure du noyau mobile 6 et l'épaulement 63 ménagé à son intérieur.

L'équilibrage de pression ainsi obtenu ne se manifeste pas après que l'ouverture de la vanne selon l'invention a eu lieu et au moment de sa fermeture, du fait que, dans ces conditions, la tête 81 de la tige de soupape 8 est en contact de butée contre ledit épaulement 63 et que l'espace compris entre ces parties est donc nul.

La perte de rapidité au moment de la fermeture est compensée par le léger retard qu'on a à l'ouverture, et qui est dû au fait que la tige de soupape 8 commence à se soulever seulement quand ledit épaulement 63 du noyau mobile vient en contact de butée contre ladite tête 81 de la tige de soupape 8.

L'extrémité inférieure de la tige 8 est conique, comme représenté en 82, et cette partie conique intervient pour ouvrir et fermer la vanne. La partie supérieure de l'alésage 62 contient, en outre, un ressort 64 disposé entre le disque 23 et la tête 81 de la tige de soupape 8. La tige 8 est constamment poussée vers le bas par le ressort 64.

Le corps de vanne 1 comporte des passages 13 et 14, ménagés intérieurement à partir de l'entrée 11 et de la sortie 12 respectivement. Des passages 15 et 16 sont dirigés vers le haut, sensiblement à partir des extrémités des passages 13 et 14 respectivement, et ils débouchent dans la cavité 18. On constitue ainsi un passage de fluide allant de l'entrée 11 à la sortie 12, en passant par les passages 13, 15, les gorges 61 et les passages 16, 14. L'extrémité supérieure du passage 16 constitue un siège de soupape 17. L'extrémité conique 82 de la tige de soupape 8 s'applique sur le siège 17. Comme la tige 8 est constamment poussée vers le bas par le ressort 64, le passage 16 est maintenu fermé par l'extrémité conique 82 de la tige 8. L'entrée 11 et la sortie 12 sont taraudées, pour permettre leur raccordement à des canalisations.

Le boîtier de bobine 3 est fixé au support 2 par sa partie taraudée 32 qui se visse sur le filetage supérieur 26 du support 2. Une vis de blocage 33, vissée dans le boîtier 3, porte à son extrémité avant contre le filetage 26 du support 2. Le capot 4 est fixé au boîtier 3 par des boulons 41. Des rondelles annulaires 72 et 73 sont disposées aux extrémités supérieure et inférieure de la bobine d'excitation 7. Un ressort 74, disposé entre le capot 4 et la rondelle supérieure 72, presse fortement la bobine d'excitation 7 contre la partie 21 de fixation du support 2, de sorte que la bobine 7 est maintenue en position fixe. Les conducteurs d'alimentation 71 de la bobine 7 se prolongent à l'extérieur du boîtier 3, par un orifice 31, et ils sont raccordés à une source appropriée de courant alternatif, par exemple au réseau de distribution de courant alternatif.

Le noyau fixe 5, placé entre le capot 4 et la partie cylindrique 22 du support 2 est, de ce fait, maintenu solidement en position. Un enroulement d'atténuation 51 est monté dans la face d'extrémité du noyau fixe 5. L'enroulement d'atténuation est un anneau constitué par une spire de gros fil de cuivre. Une gorge annulaire est formée dans la face d'extrémité inférieure du noyau 5 et l'anneau de cuivre est logé dans cette gorge. Il est préférable que le diamètre de l'enroulement d'atténuation 51 soit aussi grand que possible, dans la limite fixée par le diamètre extérieur de l'extrémité inférieure de diamètre réduit du noyau fixe 5. L'extrémité inférieure du noyau 5 est logée dans le bord dépassant 24 formé à l'extrémité supérieure de la partie cylindrique 22 du support 2. L'extrémité supérieure du bord dépassant 24 est fixée au noyau fixe 5, par soudure. Le disque 23 est en contact étroit avec la face d'extrémité inférieure du noyau 5.

Conformément à l'invention, l'extrémité inférieure du noyau fixe 5 a un diamètre extérieur réduit par rapport à sa partie principale, ou à son corps, et la hauteur dudit bord dépassant 24 est sensiblement réduite : de cette manière, la contrainte résiduelle qui résulte de la soudure du bord dépassant 24, agit de façon à resserrer la partie soudée 52, ce qui oblige le disque 23 à venir en contact avec la face d'extrémité inférieure du noyau fixe 5. Le contact de pression du disque 23 avec la face d'extrémité inférieure du noyau fixe 5 supprime le jeu entre ces pièces et il est également utile pour empêcher le broutement, lié à l'existence de ce jeu.

Le corps de vanne 1, le support 2, le noyau mobile 6, la tige de soupape 8 et le ressort 64 sont réalisés en un matériau résistant à la corrosion, tel que l'acier inoxydable. Au moins le support 2 est en matière non magnétique.

Lorsqu'un courant alternatif circule dans la bobine d'excitation 7, cette dernière engendre un flux magnétique qui traverse les noyaux 5 et 6. Par suite, le noyau mobile 6 est attiré vers le noyau fixe 5. Le mouvement du noyau 6 amène l'épaulement 63 de l'alésage 62 du noyau 6, en contact de butée avec la tête 81 de la tige de soupape 8, ce qui oblige cette tige 8 à se déplacer également vers le noyau fixe 5, en antagonisme à l'action du ressort 64. Ceci éloigne l'extrémité conique 82 de la tige de soupape 8 du siège 17 pour ouvrir le passage 16.

Les variations du flux magnétique produit par la bobine d'excitation 17 induisent une force électromotrice sur l'enroulement d'atténuation 51, ce qui engendre un courant dans cet enroulement. Le courant qui circule dans l'enroulement d'atténuation 51 produit également un flux magnétique. Ce flux est engendré par l'enroulement 51 un certain temps après la production du flux par la bobine 7 et il se combine également avec le flux fourni par la bobine 7. Ainsi, le flux magnétique de l'enroulement d'atténuation 51 est combiné avec celui de la bobine d'excitation 7 qui varie à chaque demi-période de l'alimentation en courant alternatif, de sorte que les variations résultantes des flux combinés sont plus petites. Par conséquent, le broutement du noyau mobile 6 et par suite celui de la tige de soupape 8 peuvent être réduits.

L'élimination totale dudit broutement est obtenue en utilisant la pression qui agit à la partie inférieure du noyau mobile 6, notamment dans l'espace compris entre l'alésage 27 et l'extrémité inférieure de diamètre réduit du noyau mobile 6.

**Revendications**

1. Vanne électromagnétique comprenant :

un corps de vanne (1) qui présente une entrée de fluide (11), une sortie de fluide (12) et un passage mettant en communication l'entrée (11) et la sortie (12), ce passage étant pourvu d'un siège de soupape (17) ;

une tige de soupape (8) comportant un élément d'obturation (82) pour fermer ledit passage par contact avec le siège de soupape (17) ;

un noyau mobile (6) supportant ladite tige de soupape (8) dans un alésage axial (62) ménagé dans le noyau mobile (6) et permettant la mise dudit élément d'obturation (82) en contact et hors contact avec le siège de soupape (17) ;

un noyau fixe (5) aligné avec le noyau mobile (6) et portant un enroulement d'atténuation (51) à son extrémité orientée vers le noyau mobile (6) ;

une bobine d'excitation (7) qui entoure le noyau mobile (6) et le noyau fixe (5) ;

un ressort (64) qui pousse la tige de soupape (8) dans une direction de mise en contact de l'élément d'obturation (82) avec le siège de soupape (17) ;

un manchon de guidage (2) qui comprend une partie de fixation (21), fixée au corps de vanne (1), de façon à supporter le noyau mobile (6), et une partie cylindrique creuse (22) permettant le guidage du mouvement dudit noyau mobile (6) et comportant un bord dépassant (24) qui entoure la périphérie de ladite extrémité du noyau fixe (5), laquelle extrémité est logée dans ce bord dépassant (24) dont l'extrémité avant (52) est fixée au noyau fixe (5) ; le manchon de guidage (2) est réalisé en un matériau non magnétique, laquelle vanne électromagnétique est caractérisée

en ce que l'alésage axial (62) supporte de façon mobile la tige de soupape (8) et présente une partie inférieure de petit diamètre, dans laquelle est logé le corps de ladite tige (8), et une partie supérieure de grand diamètre dans laquelle est logée une tête (81) solidaire de l'extrémité supérieure de cette tige de soupape (8), en sorte qu'un épaulement (63) est formé entre ces deux parties inférieure et supérieure de l'alésage axial (62) et qu'un espace est ménagé, à l'état de fermeture de la vanne, entre ledit épaulement (63) et la face d'extrémité de la tête (81) de la tige de soupape (8),

en ce que l'extrémité inférieure du noyau mobile (6) présente un diamètre réduit et deux gorges radiales (61) qui sont ménagées dans sa face d'extrémité et qui sont en communication avec ledit espace par l'intermédiaire d'un jeu approprié existant entre la partie inférieure de petit diamètre dudit alésage axial (62) et le corps de la tige de soupape (8) qui y est logée,

en ce que le manchon de guidage comporte un disque (23), qui est solidaire de sa partie cylindrique (22) et qui est en contact avec la surface d'extrémité du noyau fixe (5),

en ce que l'extrémité avant (52) dudit bord dépassant (24) du manchon de guidage (2) est fixée par soudage au noyau fixe (5),

et en ce que lesdits corps de vanne (1), tige de soupape (8), noyau mobile (6) et manchon de guidage (2) sont réalisés en un matériau résistant à la corrosion.

2. Vanne électromagnétique selon la revendication 1, caractérisée en ce que l'extrémité du noyau fixe (5), qui porte l'enroulement d'atténuation (51) et qui est logée dans le bord dépassant (24), présente un diamètre réduit par rapport au corps dudit noyau fixe (5), et en ce que ledit bord dépassant (24) présente une petite hauteur, en sorte que la contrainte résiduelle qui résulte de la soudure de l'extrémité avant (52) de ce bord dépassant (24) avec le noyau fixe (5) et qui se transmet, par l'intermédiaire de ce bord (24), audit disque (23) de séparation entre le noyau mobile (6) et le noyau fixe (5), comprime ce disque (23) contre la face d'extrémité du noyau fixe (5).

**Claims**

1. Electromagnetic valve comprising :

a valve body (1) which has a fluid inlet (11), a fluid outlet (12), and a passage communicating the inlet (11) with the outlet (12), this passage being provided with a valve seat (17) ;

a valve rod (8) comprising a valving element (82) for closing said passage by engagement with the valve seat (17) ;

a mobile core (6) supporting said valve rod (8) in an axial housing (62) formed in the mobile core (6) and allowing said valving element (82) to be placed in engagement and out of engagement with the valve seat (17) ;

a fixed core (5) aligned with the mobile core (6) and having an attenuation winding (51) at its end turned towards the mobile core (6) ;

an energizing coil (7) which surrounds the mobile core (6) and the fixed core (5) ;

a spring (64) which urges the valve rod (8) in a direction for placing the valving element (82) in engagement with the valve seat (17) ;

a guide sleeve (2) which comprises a fixing part (21), fixed to the body of the valve (1) so as to support the mobile core (6), and a hollow cylindrical part (2) for guiding the movement of said mobile core (6) and comprising a projecting edge (24) which surrounds the periphery of said end of the fixed core (5), this end being housed in this projecting edge (24) whose front end (52) is fixed to the fixed core (5) and the guide sleeve (2) being formed from a non magnetic material which electromagnetic valve is characterized

in that the axial bore (62) supports the valve rod (8) for movement and has a lower part of small diameter in which the body of said rod (8) is housed, and an upper part of larger diameter in which is housed a head (81) integral with the upper end of this valve rod (8), so that a shoulder (63) is formed between these two lower and upper parts of the axial bore (62) and so that a space is formed, in the closed state of the valve, between said shoulder (63) and the end face of the head (81) of the valve rod (8),

in that the lower end of the mobile core (6) has a reduced diameter and two radial grooves (61) which are formed in its end face and which are in communication with said space through an appropriate clearance existing between the smaller diameter lower part of said axial bore (62) and the body of the valve rod (8) which is housed therein,

in that the guide sleeve comprises a disk (23) which is integral with its cylindrical part (22) and which is in contact with the end surface of the fixed core (5),

in that the frond end (52) of said projecting edge (24) of the guide sleeve (2) is welded to the fixed core (5),

in that said valve body (1), valve rod (8), mobile core (6) and guide sleeve (12) are made from a corrosion resisting material.

2. The electromagnetic valve according to claim 1, characterized in that the end of the fixed core (5) which carries the attenuation winding (51) and which is housed in the projecting edge (24), has a reduced diameter with respect to the body of said fixed core (5), and in that the projecting edge (24) has a small height, so that the residual stress which results from welding the front end (52) of this projecting edge (24) to the fixed core (5) and which is transferred, through this edge (24) to the separating disk (23) between the mobile core (6) and the fixed core (5), compresses this disk (23) against the end face of the fixed core (5).

## Patentansprüche

1. Elektromagnetisches Ventil mit
einem Ventilkörper (1), in dem ein Einlasskanal (11), ein Auslasskanal (12) und ein Durchgangskanal ausgebildet sind, der den Eingangskanal (11) mit dem Ausgangskanal (12) verbindet und über einen Ventilsitz (17) verfügt,

einem Ventilstift (8), der ein Verschlusselement (82) zum Schliessen des Durchgangskanals durch Kontakt mit dem Ventilsitz (17) aufweist, einem beweglichen Kern (6), der in einer im beweglichen Kern (6) ausgebildeten axialen Bohrung (62) den Ventilstift (8) trägt und es gestattet, das Verschlusselement (82) mit dem Ventilsitz (17) in Eingriff und aus dem Eingriff zu bringen,

einem feststehenden Kern (5), der fluchtend zum beweglichen Kern (6) angeordnet ist und an seinem zum beweglichen Kern (6) weisenden Ende eine Dämpfungswicklung aufweist,

einem Erregerspule (7), die den beweglichen Kern (6) und den feststehenden Kern (5) umgibt,

einer Feder (64), die den Ventilstift (8) in Schliessrichtung drückt, wobei das Verschlusselement (82) mit dem Ventilsitz (17) in Eingriff gelangt,

einer Führungsbuchse (2), die einen Befestigungsabschnitt (21) aufweist, der am Ventilkörper (1) befestigt ist, so dass der bewegliche Kern (6) unterstützt ist, und die einen Hohlzylinderabschnitt (22) aufweist, der die Führung der Bewegung des Beweglichen Kern (6) gestattet und mit einem überstehenden Rand (24) versehen ist, der die Peripherie des erwähnten Endes des feststehenden Kerns (5) umgibt, wobei dieses Ende im Innern des überstehenden Randes (24) ruht, dessen vorstehende Kante (52) am feststehenden Kern (5) befestigt ist, und wobei die Führungsbuchse (2) aus einem nichtmagnetischen Material hergestellt ist, dadurch gekennzeichnet,

dass der Ventilstift (8) beweglich in der axialen Bohrung (62) geführt ist, die einen unteren Abschnitt geringeren Durchmessers, in dem der Körper des Ventilstiftes (8) geführt ist, und einen oberen Abschnitt grösseren Durchmessers aufweist, in dem der am oberen Ende des Ventilstiftes (8) befestigte Kopf (81) in der Weise geführt ist, dass eine Schulter (63) zwischen dem unteren und oberen Abschnitt der axialen Bohrung (62) geformt ist, und dass bei geschlossenem Ventil zwischen der Schulter (63) und der Stirnseite des Kopfes (81) des Ventilkörpers (8) eine Ausnehmung gebildet ist,

dass der untere Abschnitt des beweglichen Kerns (6) einen reduzierten Durchmesser und zwei radial verlaufende Nuten (61) aufweist, die in seiner Stirnseite ausgebildet sind und die mit der erwähnten Ausnehmung infolge eines geeigneten Spiels zwischen dem unteren Abschnitt kleineren Durchmessers der axialen Bohrung (62) und dem darin geführten Körper des Ventilschaftes (8) in Verbindung steht,

dass die Führungsbuchse (2) eine Scheibe (23) umfasst, die mit dem Hohlzylinderabschnitt (22) fest verbunden ist und die mit der Stirnseite des feststehenden Kerns (5) in Berührung steht,

dass die vorstehende Kante (52) des überstehenden Randes (24) der Führungsbuchse (2) durch Schweissen oder Löten mit dem feststehenden Kern (5) verbunden·ist

und dass der Ventilkörper (1), der Ventilschaft (8), der bewegliche Kern (6) und die Führungsbuchse (2) aus korrosionsfestem Material hergestellt sind.

2. Elektromagnetisches Ventil nach Anspruch 1, dadurch gekennzeichnet, dass die Stirnseite des feststehenden Kerns (5), die die Dämpfungswicklung (51) trägt und die im Innern des überstehenden Randes (24) angeordnet ist, einen gegenüber dem Körper des feststehenden Kerns (5) reduzierten Durchmesser aufweist und dass der überstehende Rand (24) eine geringe Höhe aufweist, so dass die aus dem Verschweissen oder Verlöten der vorstehenden Kante (52) des überstehenden Randes (24) mit dem feststehenden Kern (5) herrührende Restspannung, die sich über den Rand (24) zu der den beweglichen Kern (6) von dem feststehenden Kern (5) trennenden Scheibe (23) fortpflanzt, die Scheibe (23) gegen die Stirnseite des feststehenden Kerns (5) presst.

0 034 519